# EUROPEAN PATENT APPLICATION

(11) **EP 3 808 601 A1**
(43) Date of publication of application: **21.04.2021**
(21) Application number: 20201723.2
(22) Date of filing: 14.10.2020
(51) Int. Cl.: B60Q 1/00, F21S 45/00, B61D 29/00

(54) **LIGHT MODULE, AND METHOD AND ARRANGEMENT FOR ASSEMBLING A LIGHTING DEVICE OF A VEHICLE FROM THE LIGHT MODULES**

(30) Priority: 14.10.2019 FI 20195885
(71) Applicant: Teknoware Oy, 15200 Lahti (FI)
(72) Inventor: Holopainen, Aki, 15200 Lahti (FI)
(74) Representative: Papula Oy

(57) **Abstract**

A light module (100, 400, 600, 900, 1600) for a lighting device of a vehicle comprises a light source part and an outer housing (101) enclosing the light source part and having at least a first surface (103) and a second surface (104). The first surface of the outer housing comprises a first interlock shape (201, 202, 1001) and the second surface comprises a second interlock shape (201, 202, 901) arranged to be at least mechanically compatible with the first interlock shape. Two similar light modules are at least mechanically connectable to each other by connecting the first interlock shape of one of the light modules to the second interlock shape of the other light module. At least one of said first and second interlock shapes is continuous in a first direction (105, 905) and periodic in a second direction (106, 906). The first and the second direction are directions parallel to the surface on which the interlock shape is arranged.

## Description

### FIELD OF THE INVENTION

The invention generally relates to the structures of lighting devices of vehicles, such as headlights, daytime running or indicator lights, interior lighting devices or other lighting devices. Specifically, the invention proposes how to form a lighting device of a vehicle with two or more separate light sources.

### BACKGROUND OF THE INVENTION

In this text a vehicle denotes a passenger car, van, truck or bus, locomotive of a train, railroad car or trainset, tram, boat, ship, airplane or other means of transportation which is purposed for carrying people and/or goods and in which at least some types of lighting devices are needed. One example may be a train or a trainset, wherein the locomotive or front part must be equipped with powerful headlights for forward illumination.

It is often typical of the lighting devices of vehicles that they include several separate light sources. Incandescent or gas-discharge lamps have traditionally been used as the light sources, but there has been a trend towards an almost exclusive use of light emitting diodes, i.e. LEDs, or corresponding semiconductor light sources. For example, the headlight of a locomotive or a trainset may include several LED modules which can be switched on and off separately (or in smaller groups), whereby the designer forms a desired kind of illumination by selecting the power, disposition and optics of the modules.

Another clearly noticeable trend in the design of lighting devices of vehicles is the need to integrate the lighting device into the appearance of the rest of the vehicle. The internal structure of the lighting device and the disposition of the light sources must be configured to be such that the lighting device becomes a natural part of the design of its immediate surroundings. This causes problems especially in vehicles like trains and airplanes, as their production batches are significantly smaller than for example those of passenger cars. If a completely new headlight or other lighting device has to be designed for every model variant, the costs related to its design, testing and other product development will easily form a relatively large part of the expenses that have to be met by the revenue obtained from sales of the relatively small production batch.

### SUMMARY OF THE INVENTION

An object of the invention is to disclose a structural solution and a method of its utilization, which enable tailored lighting device models to be produced for vehicles with lower total costs than before. An object of the invention is specifically that the tailored lighting device models may be produced without sacrificing structural robustness or operating reliability. Additionally, an object of the invention is that it is well-suited for producing tailored lighting device models in various sizes and at various power levels. Further, an object of the invention is that by way of the invention, the tailored lighting device is maintainable and/or replaceable in a cost-efficient way. Yet another object of the invention is that the tailored lighting device makes efficient use of the area which is available to it for outputting light.

The objects of the invention are achieved by assembling the light source part of the lighting device from modules attached to each other via interlock shapes arranged at the outer surface of the modules. The interlock shapes are made in such a way that they allow the disposition of adjacent modules to be changed in relation to each other in at least two directions, in one of them continuously.

The invention is characterized by the features specified in the characterizing part of the accompanying independent claims. Some preferred embodiments of the invention are set forth in the dependent claims.

The light module disclosed herein comprises a light source part and an outer housing enclosing the light source part and having at least a first surface and a second surface. The first surface of the outer housing comprises a first interlock shape. The second surface of the outer housing comprises a second interlock shape arranged to be at least mechanically compatible with the first interlock shape, such that two similar light modules are at least mechanically connectable to each other by connecting the first interlock shape of one of the light modules to the second interlock shape of the other light module. At least one of said first and second interlock shapes is continuous in a first direction and periodic in a second direction, the first and the second direction being directions parallel to the surface on which the interlock shape is arranged.

According to one embodiment, the first interlock shape comprises a number of grooves extending in said first direction, and the second interlock shape comprises at least one projection which is elongated in said first direction and the thickness of which in said second direction is at most equal to the width of each of said grooves in said second direction.

According to one embodiment, there are at least three grooves and the grooves are at a constant distance from each other in said second direction.

According to one embodiment, the first surface and the second surface are parallel surfaces on opposite sides of the outer housing.

According to one embodiment, said outer housing is shaped as a hexagonal prism in cross-section, whereby said first surface and second surface constitute two of the six side surfaces of said prism, and at least two other side surfaces of the six side surfaces of said prism comprise a pair of interlock shapes corresponding to the first and the second interlock shape and arranged to be compatible with each other.

According to one embodiment, two or more grooves extend perpendicular to the longitudinal axis of said prism along at least three adjacent side surfaces of the six side surfaces of said prism, and said first surface is one of said three adjacent side surfaces, whereby on the first surface said grooves extending perpendicular to the longitudinal axis of the prism are part of said first interlock shape.

According to one embodiment, a projection extends along three other side surfaces of the six side surfaces of said prism, the projection being elongated in the direction perpendicular to the longitudinal axis of said prism, and said second surface is one of said three other side surfaces, whereby on the second surface said projection is part of said second interlock shape.

According to one embodiment, said projection is located in the direction of the longitudinal axis of said prism at the same position as one of said grooves extending perpendicular to the longitudinal axis of the prism.

According to one embodiment, the six side surfaces of said prism form three pairs of parallel side surfaces.

According to one embodiment, in the hexagonal cross-section of said prism there are two opposite angles of 90 degrees and four angles of 135 degrees.

An arrangement for assembling a lighting device of a vehicle as disclosed herein comprises two or more light modules described above, connected to each other in such a way that in the interconnected light modules, a first interlock shape of one of the light modules is each time connected to a second interlock shape of another light module.

According to one embodiment, at least two of said light modules are connected to each other in such a way that they are located at different positions in the direction of the longitudinal axis of the light modules.

In a method for assembling a lighting device of a vehicle as disclosed herein, two light modules described above are connected to each other in such a way that in the interconnected light modules, a first interlock shape of one of the light modules is each time connected to a second interlock shape of the other light module.

According to one embodiment, at least two of said light modules are connected to each other in such a way that they are located at different positions in the direction of the longitudinal axis of the light modules.

### LIST OF FIGURES

**Fig. 1** illustrates an axonometric projection of a light module,
**Fig. 2** illustrates the light module of Fig. 1 as seen from the side,
**Fig. 3** illustrates the interconnection of three of the light modules of Fig. 1 and 2,
**Fig. 4** illustrates an axonometric projection of a light module,
**Fig. 5** illustrates the interconnection of three of the light modules of Fig. 4,
**Fig. 6** illustrates an axonometric projection of a light module,
**Fig. 7** illustrates the light module of Fig. 6 as seen from the side,
**Fig. 8** illustrates the interconnection of three of the light modules of Fig. 6 and 7,
**Fig. 9** illustrates an axonometric projection of a light module,
**Fig. 10** illustrates the light module of Fig. 9 as seen from the front,
**Fig. 11** illustrates the interconnection of three of the light modules of Fig. 9 and 10,
**Fig. 12** illustrates the interconnection of four of the light modules of Fig. 9 and 10,
**Fig. 13** illustrates the interconnection of four of the light modules of Fig. 9 and 10,
**Fig. 14** illustrates the interconnection of four of the light modules of Fig. 9 and 10,
**Fig. 15** illustrates the connection of a fifth light module to the arrangement of Fig. 14,
**Fig. 16** illustrates an axonometric projection of a light module, and
**Fig. 17** illustrates the interconnection of five of the light modules of Fig. 16.

In the figures, the same refence numbers are used to indicate corresponding elements.

### DETAILED DESCRIPTION OF THE INVENTION

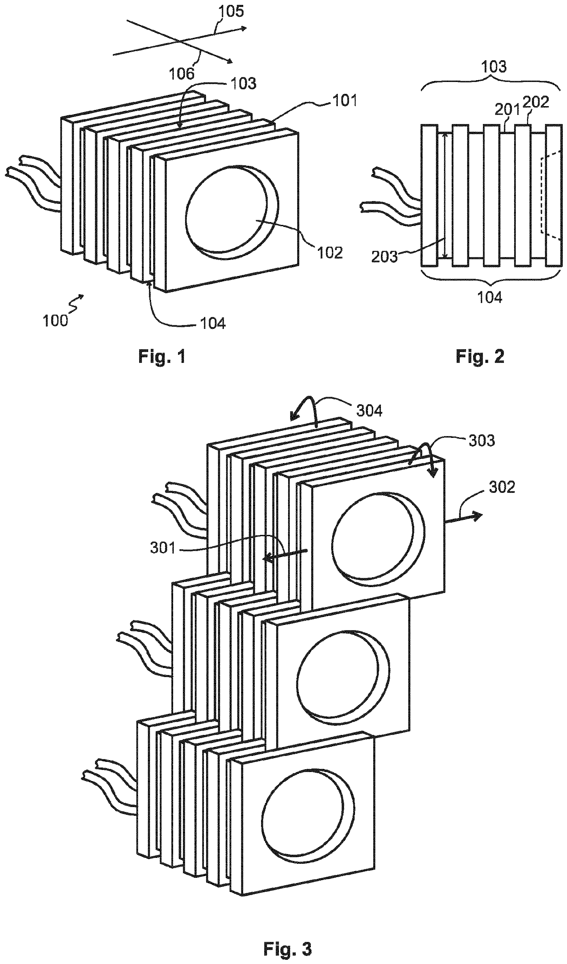

Fig. 1 illustrates a light module 100 which may be used as part of a lighting device of a vehicle. Inside the light module 100 there is a light source part, the more detailed implementation of which need not be discussed herein, as it does not have significant relevance to the features of the light module as described hereinafter. The light source part may comprise an electronics part and the actual light source, for example such that an LED or an LED matrix is used as the light source and the electronics part provides for the supply of a suitable electric current to the LED or the LED matrix at a suitable voltage level. The light module may be powered and control signals may optionally be exchanged with the light module for example by means of electric cables connected to the light source part, the electric cables being schematically illustrated in Fig. 1 as extending from the back of the light module.

The light source part is enclosed within an outer housing 101, as illustrated in Fig. 1. A front surface of the outer housing is provided with an opening 102 for outputting the light produced by the light source. The outer housing has a first surface 103 and a second surface 104, which are in the configuration of Fig. 1 the upper and lower surface of the outer housing, as also illustrated in Fig. 2. The outer housing 101 functions as a mechanical support structure of the light module 100, and it may also be used to conduct heat away from the light source part arranged therein. In particular, the outer housing 101 is shaped in such a way that it is possible to connect the light modules to each other in many different ways.

For connecting the light modules to each other, the first surface 103 of the outer housing 101 comprises one interlock shape, which may for the purpose of unambiguity be called a first interlock shape. In the embodiment of Fig. 1 and 2, the first interlock shape consists of a number of parallel grooves 201 and ridges 202, the width of which in the direction of the longitudinal axis of the light module is constant. Correspondingly, the second surface 104 of the outer housing 101 comprises a second interlock shape, which is in the embodiment of Fig. 1 and 2 exactly similar to the first interlock shape.

As illustrated in Fig. 1 and 2, the second interlock shape is arranged to be mechanically compatible with the first interlock shape: two of the light modules as described may be mechanically connected to each other by pressing one over the other, such that the ridges of the first interlock shape in the lower light module are pressed to the grooves of the second interlock shape in the upper light module, and vice versa. Fig. 3 illustrates three light modules connected to each other in this way.

In the embodiment of Fig. 1-3, the first and the second interlock shape are continuous in a direction 105 transverse to the longitudinal axis of the light module and periodic in a direction 106 parallel to the longitudinal axis of the light module. In more general terms, it may be stated that the interlock shapes are continuous in one direction parallel to the first surface 103 and periodic in another direction parallel to the first surface 103. These features have two consequences, which may be seen in Fig. 3. It would be possible to move the light modules arranged one over the other steplessly in relation to each other in a lateral direction, i.e. in the direction in which the interlock shapes are continuous: see, e.g., arrows 301 and 302. This concept of stepless movement also covers steplessly selecting the disposition of the light modules in this direction in relation to each other before connecting them to each other - the friction between the interlock shapes may be so high that it would be difficult or impractical to move them after they have been connected. In the longitudinal direction, i.e. in the direction in which the interlock shapes are periodic, it is possible to move the light modules in relation to each other only in steps, such that the shortest possible displacement is equal to the period of the periodic interlock shape, and other possible displacements are integer multiples of that period: see, e.g., arrows 303 and 304.

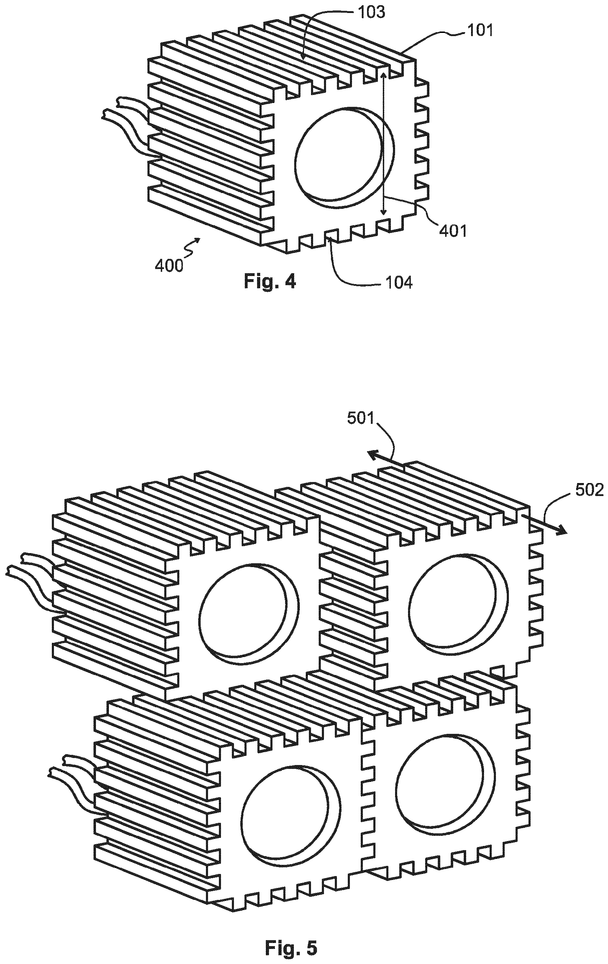

Fig. 4 illustrates a light module 400 which is mainly similar to the light module 100 of Fig. 1, but the directions in which the interlock shapes are continuous and periodic have been switched. The resulting consequence may be seen in Fig. 5. It would be possible to move the light modules of Fig. 4 arranged one over the other steplessly in relation to each other in the longitudinal direction (see, e.g., arrows 501 and 502), but only in steps in the lateral direction.

Another difference between the light modules of Fig. 1-3 and Fig. 4-5 involves the disposition of the interlock shapes on the first surface 103 and the second surface 104. As seen in the direction of perpendicular distance between these surfaces (203 in Fig. 2, 401 in Fig. 4), both of the interlock shapes in the embodiment of Fig. 1-3 have a ridge at the same position and a groove at the same position. Because the mechanical connection of the interlock shapes to each other occurs on a reciprocal basis (ridge to groove and groove to ridge), the light modules according to the embodiment of Fig. 1-3 are always disposed in the interconnected assembly with a small (half-period) difference in their location in the direction of the periodicity of the interlock shape. As a result, three light modules may not be connected to each other in such a way that the interlock shapes of each of the light modules would always be connected to the interlock shapes of the two other light modules. In the embodiment of Fig. 4-5 this is possible, because the first interlock shape comprises a ridge where the second interlock shape comprises a groove and vice versa. In other words, in the embodiment of Fig. 4-5, there is a half-period phase difference between the first and the second interlock shape.

In the embodiments of Fig. 1-5, the light modules are generally shaped as a rectangular prism. The first and the second surface described above constitute two of the four side surfaces of the prism, more specifically two opposite surfaces. In the embodiment of Fig. 1-5, the interlock shapes also extend to the two other side surfaces, which provides diverse possibilities for connecting the light modules to each other. In particular, when there is a half-period phase difference in the disposition of the interlock shapes arranged on the opposite sides as in Fig. 4-5, the light modules may be compactly connected to each other by means of the interlock shapes, not only vertically but also laterally, as illustrated in Fig. 5.

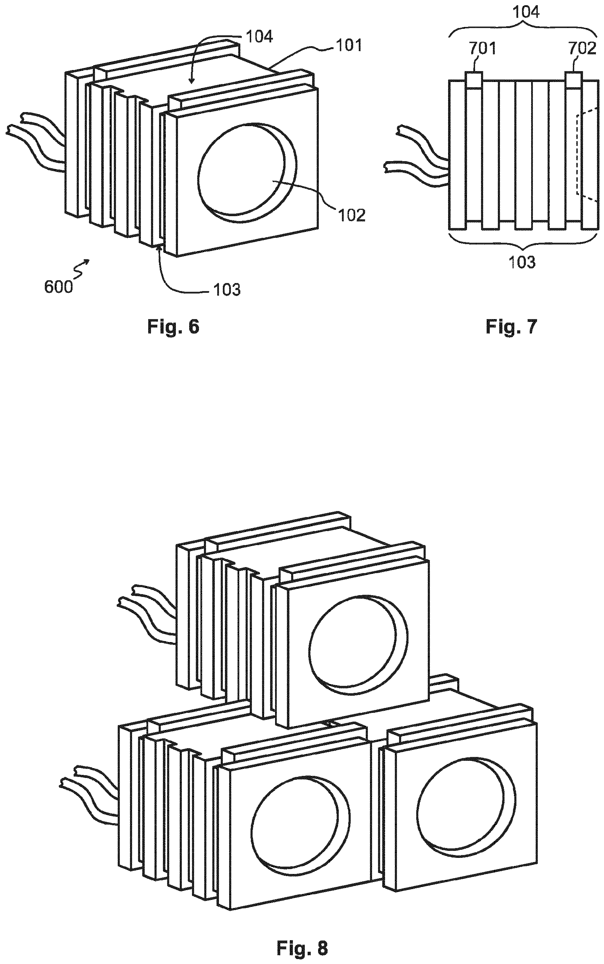

The interlock shapes to be connected to each other need not be identical, as long as they are mechanically compatible. Fig. 6 and 7 illustrate a light module 600 wherein the interlock shape arranged at the second surface 104 of the outer housing 101 comprises only two ridges 701 and 702, while the first surface 103 comprises a number of grooves and ridges. Also in this case the light module 600 is generally shaped as a rectangular prism and the first surface 103 and the second surface 104 constitute its two opposite side surfaces. A similar pair of mutually different but mechanically compatible interlock shapes is arranged on the two other side surfaces. Because, when connecting such light modules to each other, no more than two ridges of the second interlock shape go into the grooves of the first interlock shape, it could be stated that the first interlock shape only consists of a number of grooves.

Fig. 8 illustrates one way in which three of the light modules of Fig. 6 and 7 may be connected to each other. In Fig. 8 the disposition of the two lowermost light modules in relation to each other may be changed in steps in the direction of the longitudinal axis of the light modules. However, they must be arranged at the same height in the horizontal direction in order for the interlock shape arranged at the lower surface of the overlying light module to be connected equally firmly to the interlock shapes arranged at the upper surface of both of the underlying light modules.

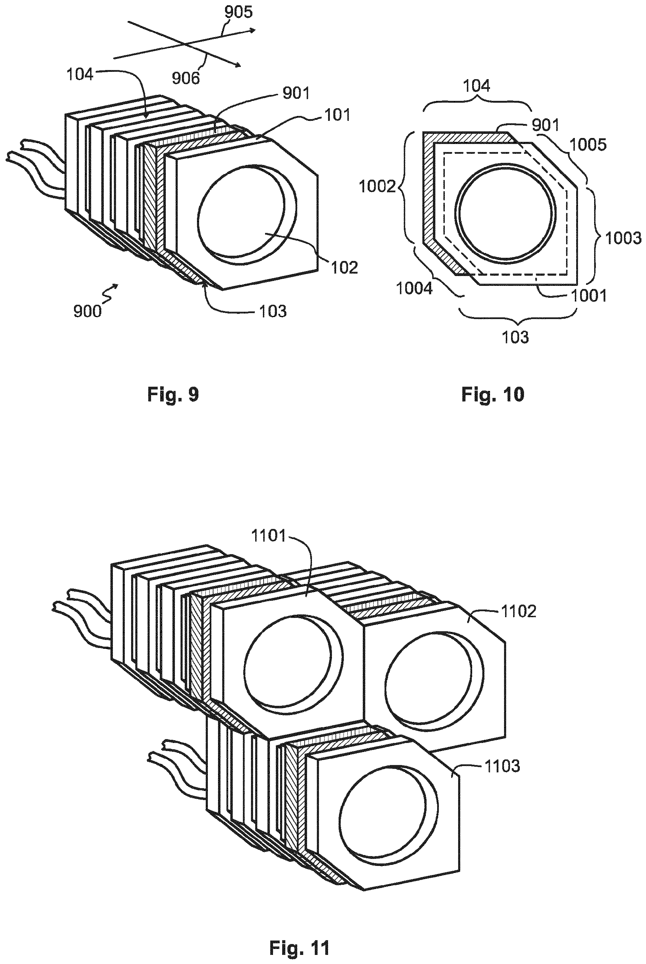

Fig. 9 illustrates a light module 900 for a lighting device of a vehicle. The light module 900 comprises a light source part which is not illustrated as such in Fig. 9 but which may comprise for example an electronics part and the actual light source, which may be an LED, LED matrix or other suitable light source. The light source part is enclosed within an outer housing 101, as illustrated in Fig. 9. A front surface of the outer housing is provided with an opening 102 for outputting the light produced by the light source. The outer housing has a first surface 103 and a second surface 104 which are in the configuration of Fig. 9 the upper and lower surface of the outer housing, as also illustrated in Fig. 10. The outer housing 101 functions as a mechanical support structure of the light module 900, and it may also be used to conduct heat away from the light source part arranged therein. In particular, the outer housing 101 is shaped in such a way that it is possible to connect the light modules to each other in many different ways.

For connecting the light modules to each other, the first surface 103 of the outer housing 101 comprises a first interlock shape. The second surface 104 of the outer housing 101 comprises a second interlock shape arranged to be at least mechanically compatible with the first interlock shape, such that two similar light modules are at least mechanically connectable to each other by connecting the first interlock shape of one of the light modules to the second interlock shape of the other light module. In the embodiment of Fig. 9 and 10, the first interlock shape is continuous in a first direction 905 and periodic in a second direction 906. As the first surface 103 and the second surface 104 are parallel in this embodiment, the first direction 905 and the second direction 906 described above are directions parallel to both of the surfaces. In the embodiment of Fig. 9 and 10, the first direction 905 is perpendicular to the direction of the longitudinal axis of the light module 900 and the second direction 906 is parallel to the longitudinal axis of the light module 900.

In the embodiment of Fig. 9 and 10, the first interlock shape comprises a number of grooves 1001 extending in the first direction 905. The second interlock shape comprises a projection 901 which is elongated in the first direction 905 and the thickness of which in the second direction 906 is at most equal to the width of each of the grooves 1001 of the first interlock shape in the second direction 906. In other words, the thickness of the projection 901 and the width of the grooves 1001 correspond to each other, enabling the projection 901 of one of the light modules to be pressed into any of the grooves 1001 of an adjacent light module. For the purpose of periodicity, the first interlock shape must comprise at least two grooves 1001. More diverse connectivity of the modules to each other is obtained when there are at least three grooves 1001 at a constant distance from each other in the second direction 906.

As illustrated in Fig. 9 and 10, the second interlock shape is arranged to be mechanically compatible with the first interlock shape: two of the described light modules may be mechanically connected to each other by pressing one over the other, such that the projection 901 of the second interlock shape in a lower light module is pressed into one of the grooves 1001 arranged in the first interlock shape of an upper light module. In the embodiment of Fig. 9 and 10, the first and the second interlock shape are continuous in the first direction 905 (transverse to the longitudinal axis of the light module) and periodic in the second direction 906 (parallel to the longitudinal axis of the light module).

A common feature of the embodiment of Fig. 9 and 10 with the embodiments of Fig. 1-8 is that the first surface 103 and the second surface 104 are parallel surfaces on opposite sides of the outer housing 101. The embodiment of Fig. 9 and 10 differs from the above embodiments in that in the embodiment of Fig. 9 and 10 the outer housing 101 of the light module is shaped as a hexagonal prism in cross-section, whereby the first surface 103 and the second surface 104 constitute two of the six side surfaces of the prism.

If the outer housing of the light module is shaped as a hexagonal prism in cross-section like in Fig. 9 and 10, at least two other side surfaces of the six side surfaces of the prism may comprise a pair of interlock shapes corresponding to the above-described first and second interlock shapes and arranged to be compatible with each other. In the embodiment of Fig. 9 and 10, the side surfaces form three pairs of opposite, mutually parallel side surfaces. In the configuration illustrated in the figures, in addition to the pair formed by the first surface 103 and the second surface 104 as described above, vertical side surfaces 1002 and 1003 constitute a pair and oblique side surfaces 1004 and 1005 constitute a pair. Two or more grooves extend perpendicular to the longitudinal direction 906 of the prism along three adjacent side surfaces 103, 1003 and 1005 of the six side surfaces of the prism: for example, groove 1001 continues in the same direction and with the same width from the first surface 103 to the two other side surfaces 1003 and 1005. In other words, the grooves described above as a feature of the first surface 103 are part of a larger (first) set of interlock shapes encompassing the adjacent side surfaces 103, 1003 and 1005. Correspondingly, in the embodiment of Fig. 9 and 10 a projection extends along the three other side surfaces 104, 1002 and 1004 of the six side surfaces of the prism, the projection being elongated in the direction 905 perpendicular to the longitudinal axis of the prism. The second surface 104 described above is one of these three other side surfaces, whereby the projection 901 described above as a feature of the second surface 104 is part of a larger (second) set of interlock shapes encompassing the adjacent side surfaces 104, 1002 and 1004.

It is possible to mechanically connect the light modules according to the embodiment of Fig. 9 and 10 to each other in multiple ways. Fig. 11 illustrates one example in which three of the light modules according to Fig. 9 and 10 are connected to each other. The projection of the second interlock shape, of which projection the portion arranged on the second surface is in Fig. 9 and 10 indicated by reference number 901, is located in the direction 906 of the longitudinal axis of the prism at the same position as one of the grooves 1001 extending perpendicular to the longitudinal axis of the prism and forming the first interlock shape. This mutual disposition of the projection and the groove is thus in accordance with what has been explained above with reference to the embodiment of Fig. 6-8. Thereby, two uppermost modules 1101 and 1102 in Fig. 11 may be connected to each other in such a way that their front surfaces lie flush with each other. The projection arranged in module 1102 on the side surface corresponding to side surface 1002 of Fig. 10 is inserted in the groove arranged in module 1101 on the side surface corresponding to side surface 1003 of Fig. 10.

An assembly formed by the two modules 1101 and 1102 is connected in the embodiment of Fig. 11 to a third module 1103 in such a way that the projection arranged in module 1101 on the side surface corresponding to side surface 1004 of Fig. 10 is inserted in the groove arranged in module 1103 on the side surface corresponding to side surface 1005 of Fig. 10.

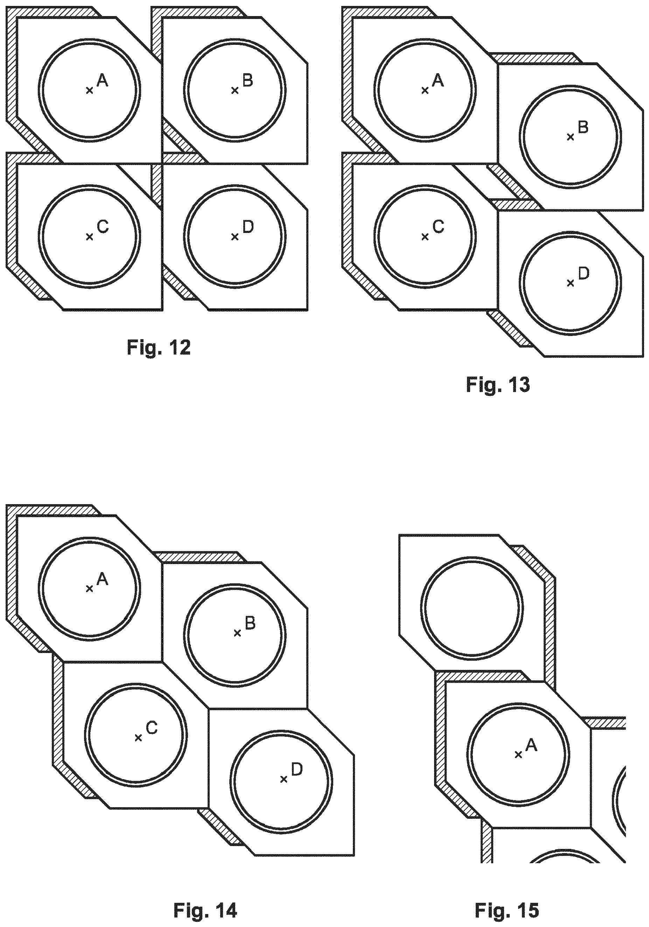

In the embodiment of Fig. 9-11, the outer housing of the light module is specifically shaped in cross-section as a hexagonal prism in the cross-section of which there are two opposite angles of 90 degrees and four angles of 135 degrees. This allows the possibility to connect the light modules to each other in many ways where the shape of a matrix formed by the light modules as seen from the direction of their optical axes may be selected as desired. Fig. 12, 13 and 14 illustrate some examples. In Fig. 12, the shape of the matrix formed by the light modules is rectangular, such that as seen from the direction of the optical axes, centres A, B, C and D of the light modules form a square with two vertical sides and two horizontal sides. By sliding the two right-most light modules in the figure in a downward direction, for example the arrangement of Fig. 13 is obtained, wherein as seen from the direction of the optical axes, the centres A, B, C and D of the light modules form a parallelogram with two vertical sides AC and BD. By sliding from this configuration the two upper light modules to the left in the figure, for example the arrangement of Fig. 14 is obtained, wherein the parallelogram formed by the centres A, B, C and D of the light modules is further flattened and does not have any vertical or horizontal sides with reference to the configuration illustrated in the figure.

For optical purposes, it is often advantageous that the opening arranged in the outer housing of the light module for outputting the light produced by the light source is rounded. Fig. 14 illustrates one specific advantage achieved by the outer housing of the light module not being quadrilateral in cross-section as in the embodiments of Fig. 1-8, but having more corners, for example six as in the embodiments of Fig. 9-14. The more corners there are in a polygon, the greater a proportion of the surface area of the polygon it is possible to cover with a circle drawn inside the polygon. If all cross-sectionally hexagonal or higher-order polygonal modules in the lighting device arrangement can be disposed, as seen from the direction of the optical axes, compactly side by side without empty spaces, as in Fig. 14, the proportional surface area emitting light as seen from this direction may be maximized. In other words, this type of lighting device makes efficient use of the area available for outputting light.

In the embodiment of Fig. 9-11, the first interlock shape, i.e. the grooves, also continue on those surfaces 104, 1002 and 1004 of the outer housing of the light module which comprise the second interlock shape, i.e. the projection. This provides a special advantage particularly if the second interlock shape - i.e. the projection in the embodiments described herein - is arranged at only one position in the direction of the longitudinal axis of the light module. Let us assume that yet one light module is to be added to the upper left position in the arrangement of Fig. 14. Assume also that the additional module would be placed so far back that the second interlock shape of the uppermost light module in Fig. 14, i.e. the projection at its upper surface, would not be aligned with any of the first interlock shapes, i.e. grooves, of the added light module. The added light module may in this case be rotated for example by 180 degrees about its longitudinal axis so as to orient its second interlock shape in the downward direction, and it may now be inserted in one of the grooves located farther in the back at the upper surface of the light module underlying the added light module. Fig. 15 illustrates this type of arrangement.

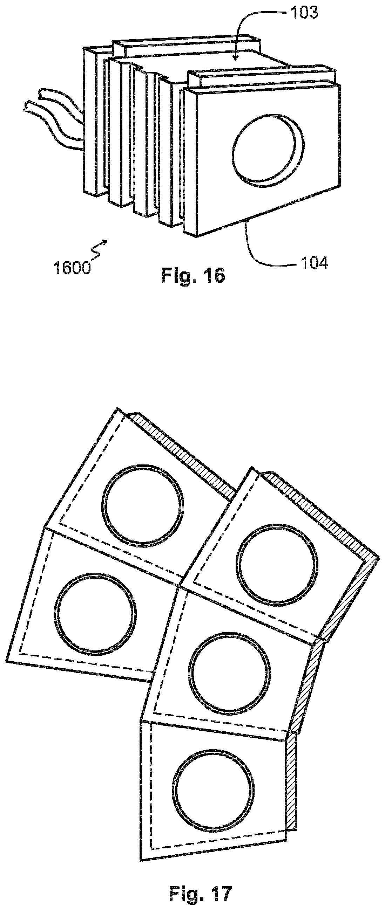

The description above has dealt with embodiments in which the first and the second surface on which the interlock shapes are located are parallel surfaces on opposite sides of the light module. This is not an essential requirement in the invention, but the first and the second surface may extend in different directions. Fig. 16 illustrates a light module 1600 which is in other features similar to the light module 600 of Fig. 6, but in which the first surface 103 and the second surface 104 are not parallel. Fig. 17 illustrates an example of how an arrangement for assembling a lighting device of a vehicle may be formed from these types of light modules.

It has been stated above that the first and the second interlock shape are arranged to be at least mechanically compatible and that two similar light modules are at least mechanically connectable to each other by means of the interlock shapes. This is intended to mean that the interlock shapes and connection of the modules may also encompass other than mechanical features, for example electrical features. In contrast or in addition to what has been stated above on arranging the power supply and control data to the light modules via cables, it is possible to form, at the outer surface of the light modules, electrically conductive, matching connection parts, such that the interconnection of two light modules by means of the interlock shapes forms at the same time at least one electrically conductive connection between the light modules.

The description above has mainly dealt with embodiments in which the first and the second interlock shape are continuous in the above-described first direction: projections have been discussed as the second interlock shape, the projections being elongated in the same direction as the grooves of the first interlock shape. This is not an essential requirement in terms of the invention. For example, such an embodiment may be considered in which the second interlock shape consists of one, two or more circular cylinder shaped pins having a diameter which is substantially the same as the width of a groove of the first interlock shape. Supported on the second interlock shape consisting of one pin, the modules may be rotated in relation to each other about the centre axis of the pin. If the second interlock shape comprises two of such pins, they may be snapped into the same groove or different grooves in the first interlock shape, such that the modules either lie parallel to each other or are directed in different directions in a stepwise manner depending on how many grooves are present between the grooves into which the pins are snapped.

The arrangement for assembling a lighting device of a vehicle may be formed from two or more light modules by connecting them to each other in such a way that in the interconnected light modules, the first interlock shape of one of the light modules is each time connected to the second interlock shape of another light module. The interconnected light modules may be further connected to some common support structure which may be a support structure of the lighting device of the vehicle or part of some support structure of a larger technical unit. In addition, other elements may be added to the arrangement, such as a front screen streamlining the shape and providing protection against external conditions. The supply of electricity and possible control signals to the arrangement may be arranged for example by means of connection parts built for this purpose. Additionally or alternatively, the cables of the light modules may be connected as such to some coupling points providing a connection to other electrical systems of the vehicle.

As the light modules may be connected to each other in such a way that at least two of the light modules are located at different positions in the direction of the longitudinal axis of the light modules, and as the light modules may also be attached to each other in many different ways in the lateral direction, from identical light modules it is possible to build lighting devices for vehicles in the most diverse sizes and shapes. This will significantly save design and manufacturing costs, as every lighting device model does not have to be each time designed, built and tested from the start. By way of suitable shape and size of the interlock shapes, the light modules can be connected to each other very firmly and securely. A lighting device assembled this way is easy to maintain, as a damaged module may simply be replaced by a new one.

The embodiments of the invention presented above by way of example are not intended to be limiting; instead, they illustrate some examples of practical implementations of the characteristic features of the invention. It is possible to combine the features presented in connection with one embodiment with features presented in connection with another embodiment, unless specifically disallowed in this text.

## Claims

1. A light module (100, 400, 600, 900, 1600) for a lighting device of a vehicle, the light module comprising:
- a light source part, and
- an outer housing (101) enclosing the light source part and having at least a first surface (103) and a second surface (104),
**characterized in that**
- the first surface of the outer housing comprises a first interlock shape (201, 202, 1001),
- the second surface of the outer housing comprises a second interlock shape (201, 202, 901) arranged to be at least mechanically compatible with the first interlock shape, such that two similar light modules are at least mechanically connectable to each other by connecting the first interlock shape of one of the light modules to the second interlock shape of the other light module, and
- at least one of said first and second interlock shapes is continuous in a first direction (105, 905) and periodic in a second direction (106, 906), the first and the second direction being directions parallel to the surface on which the interlock shape is arranged.

2. The light module according to claim 1, wherein:
- the first interlock shape comprises a number of grooves (201, 1001) extending in said first direction, and
- said second interlock shape comprises at least one projection (202, 901) which is elongated in said first direction (105, 905) and the thickness of which in said second direction (106, 906) is at most equal to the width of each of said grooves in said second direction.

3. The light module according to claim 2, wherein:
- there are at least three of said grooves (201, 1001), and
- said grooves (201, 1001) are at a constant distance from each other in said second direction (106, 906).

4. The light module according to any of the preceding claims, wherein:
- said first surface (103) and second surface (104) are parallel surfaces on opposite sides of the outer housing (101).

5. The light module according to any of the preceding claims, wherein:
- said outer housing (101) is shaped as a hexagonal prism in cross-section, whereby said first surface (103) and second surface (104) constitute two of the six side surfaces of said prism, and
- at least two other side surfaces of the six side surfaces (1002, 1003, 1004, 1005) of said prism comprise a pair of interlock shapes corresponding to said first and second interlock shapes and arranged to be compatible with each other.

6. The light module according to claim 5, wherein :
- two or more grooves extend perpendicular to the longitudinal axis of said prism along at least three adjacent side surfaces (103, 1003, 1005) of the six side surfaces of said prism, and
- said first surface (103) is one of said three adjacent side surfaces, whereby on the first surface said grooves (1001) extending perpendicular to the longitudinal axis of the prism are part of said first interlock shape.

7. The light module according to claim 6, wherein :
- a projection extends along the three other side surfaces (104, 1002, 1004) of the six side surfaces of said prism, the projection being elongated in the direction perpendicular to the longitudinal axis of said prism,
- said second surface (104) is one of said three other side surfaces, whereby on the second surface said projection (901) is part of said second interlock shape.

8. The light module according to claim 7, wherein:
- in the direction of the longitudinal axis of said prism, said projection (901) is located at the same position as one of said grooves extending perpendicular to the longitudinal axis of the prism.

9. The light module according to any of claims 5-8, wherein:
- the six side surfaces of said prism form three pairs of parallel side surfaces.

10. The light module according to claim 9, wherein:
- in the hexagonal cross-section of said prism there are two opposite angles of 90 degrees and four angles of 135 degrees.

11. An arrangement for assembling a lighting device of a vehicle, **characterized in that** it comprises two or more light modules according to any of claims 1-10, connected to each other in such a way that in the interconnected light modules, a first interlock shape of one of the light modules is each time connected to a second interlock shape of another light module.

12. The arrangement according to claim 11, wherein at least two of said light modules are connected to each other in such a way that they are located at different positions in the direction of the longitudinal axis of the light modules.

13. A method for assembling a lighting device of a vehicle, **characterized in that** two light modules according to any of claims 1-10 are connected to each other in such a way that in the interconnected light modules, a first interlock shape of one of the light modules is each time connected to a second interlock shape of the other light module.

14. The method according to claim 13, wherein at least two of said light modules are connected to each other in such a way that they are located at different positions in the direction of the longitudinal axis of the light modules.
